Europäisches Patentamt

European Patent Office

Office européen des brevets

(11) Publication number: **0 262 866**
**A2**

## (12) EUROPEAN PATENT APPLICATION

(21) Application number: 87308445.3

(22) Date of filing: 24.09.87

(51) Int. Cl.⁴: **F16D 65/56** , F16D 65/22

(30) Priority: 03.10.86 GB 8623755

(43) Date of publication of application:
06.04.88 Bulletin 88/14

(84) Designated Contracting States:
DE FR GB IT

(71) Applicant: **LUCAS INDUSTRIES public limited company**
**Great King Street**
**Birmingham, B19 2XF West Midlands(GB)**

(72) Inventor: **Margetts, Hugh Grenville**
**26, Redwood**
**Ross-on-Wye Herefordshire(GB)**

(74) Representative: **Waite, Anthony William et al**
**MARKS & CLERK Alpha Tower Suffolk Street**
**Queensway**
**Birmingham B1 1TT(GB)**

(54) **Brake actuator.**

(57) A brake actuator has a force-applying means in the form of a wedge (14) arranged to separate opposed tappets (11, 12) by way of interposed rollers (16, 17). Each tappet is connected by a screw thread to a respective adjuster shaft (39, 40) to form an extendible strut. A drive pinion (21) is engaged by a rack (14C) formed on the wedge and is rotated by actuating movement of the wedge. The pinion drives a sleeve (22) by way of a multi-plate clutch (24), the sleeve in turn driving a secondary pinion (34) via a sprag clutch (33). Another secondary pinion (36) is driven from the first by a drive shaft (35), both secondary pinions being engaged with external teeth (37, 38) respectively on the tappets (11, 12). Both tappets are adjusted simultaneously during brake applying movement of the wedge and the sprag clutch slips during the wedge return movement. The multi-plate clutch (24) slips during excessive actuating loads and renders the adjuster load insensitive.

FIG.3

## BRAKE ACTUATOR.

This invention relates to a brake actuator, primarily for use in a vehicle braking system, and being of the general kind in which force-applying means is arranged to separate opposed tappets which transmit thrust from said means to braking elements engaged, in use, by the tappets.

It is sometimes desirable to make provision for the simultaneous automatic adjustment of both tappets, and this can lead to difficulties in some types of actuator. In one prior proposal, relating to a wedge and roller actuator, the wedge actuates a yoke which is supported for sliding movement on a pivoted shaft and forms a pair of racks engaging respective toothed wheels operatively associated with the tappets, the racks performing a generally linear movement and engaging successive teeth on said wheels in order to rotate the wheels and cause adjustment of the tappets. This arrangement is not only excessively complicated, but potentially unreliable because of possible jamming of the various sliding and pivoting parts.

An object of the present invention is to provide a brake actuator of the aforesaid general kind which incorporates an improved adjuster mechanism of simple and reliable construction capable of adjusting both tappets simultaneously.

According to the present invention, a brake actuator comprises force-applying means arranged to separate opposed tappets which transmit thrust from said means to braking elements engaged, in use, by the tappets, each tappet including a pair of threadedly interengaged members forming an extensible strut, a drive device connected to the force-applying means in such a manner as to be displaced by actuating movement of said means, transmission means drivingly coupling said drive device, for one direction of displacement, to a pair of interconnected driving elements each permanently engaged with respective ones of the interengaged strut members of each strut, whereby said displacement of the drive device resulting from actuating movement of the force-applying means in one direction is transmitted via said driving elements to said interengaged strut members to extend the struts simultaneously.

Preferably, the drive device comprises a first part, conveniently in the form of a pinion, actuated by the force-applying means and a second part coupled to the first part by second transmission means, conveniently in the form of a multi-plate clutch, which ceases to drive upon application by said force-applying means to the first part of the drive device of a force exceeding a predetermined value, thereby preventing operation of the adjuster during the continuance of said excessive force. The operation of the adjuster is thus rendered load insensitive.

Typically, at least said driving elements and the strut members engaged thereby are interengaged by way of non-helical toothed formations. Some known adjusters using helical and other inclined formations for this purpose are subject to the occurrence of small random alterations of the adjuster settings due to spurious forces generated in the adjuster components by vibrational forces transmitted through said inclined formations. The aforesaid use of non-helical formations minimises this problem in the adjuster of the invention.

The invention will now be described, by way of example, with reference to the accompanying drawings in which:-

Figure 1 is an end view of one form of internal shoe drum brake incorporating the actuator of the invention;

Figure 2 is a transverse cross-sectional view of one form of actuator for use in the brake of Figure 1;

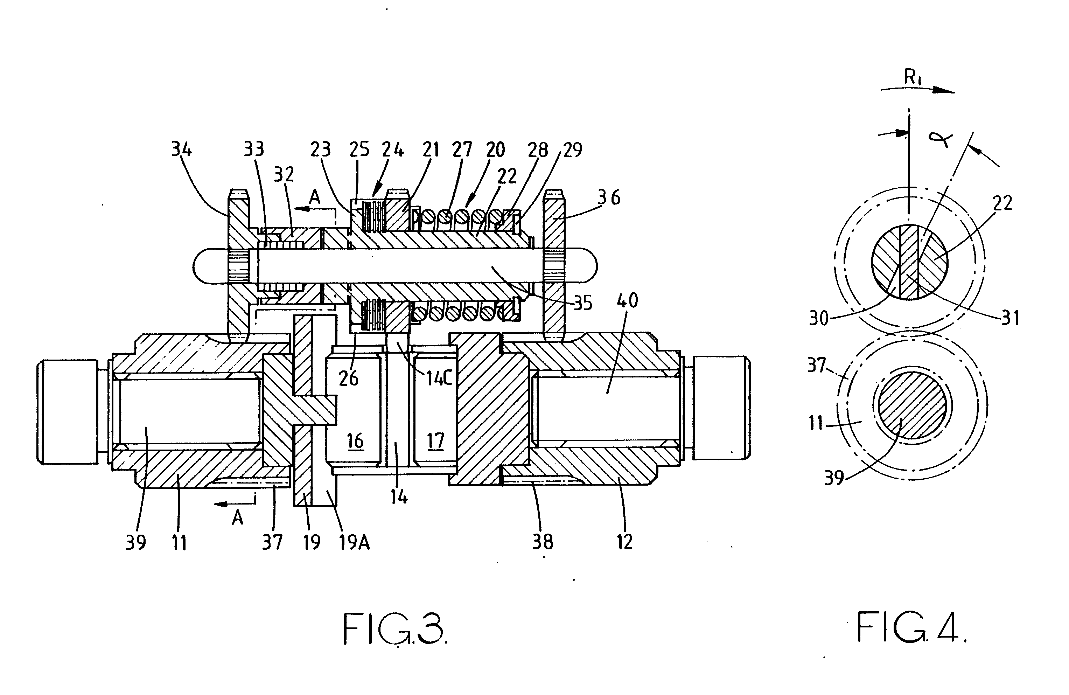

Figure 3 is a cross-sectional view of an automatic adjuster mechanism forming part of the actuator of Figure 2, and

Figure 4 is a cross-section along the line A-A of Figure 3.

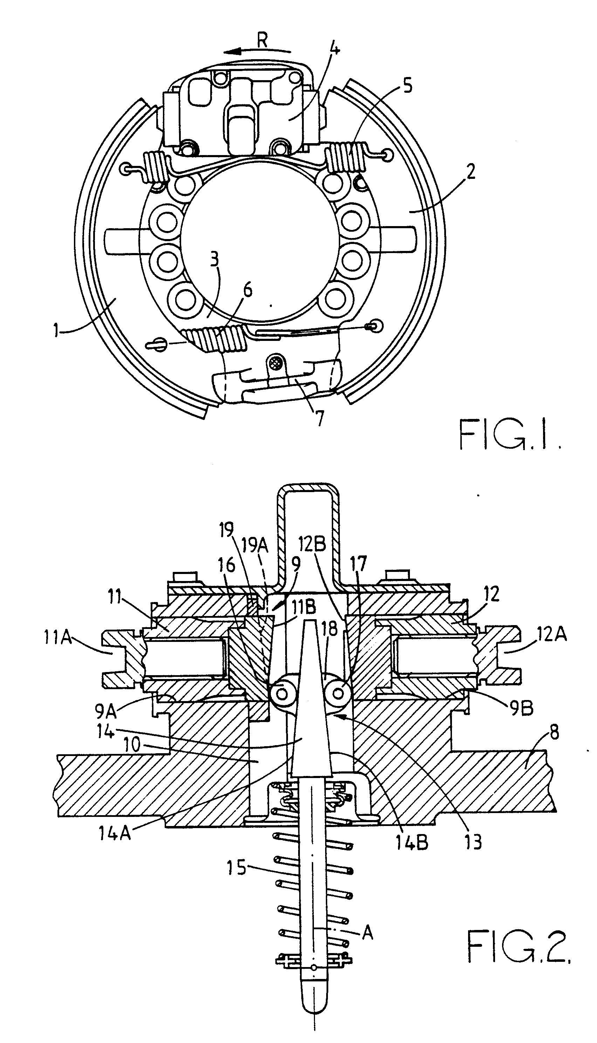

The internal shoe drum brake illustrated in Figure 1 of the drawings includes a pair of brake shoes 1, 2 mounted on a stationary backplate 3 which also carries a wedge and roller actuator 4 disposed between one pair of adjacent shoe ends and operable to urge the shoes outwardly into braking engagement with a brake drum (not shown) against the opposing action of a pair of shoe return springs 5, 6. The other adjacent shoe ends engage an abutment 7 which is secured to or integral with the backplate 3 and permits a degree of pivotal and sliding movement of the shoes, during actuation, in conventional manner. The brake illustrated is of leading/trailing configuration with the shoes 1 and 2 acting in leading and trailing modes respectively for a brake rotational direction indicated by the arrow 'R'.

The actuator 4 may conveniently be in the form illustrated in Figure 2 of the drawings, having a body 8 with an axial through bore 9 divided into bore portions 9A, 9B which are intersected by a transverse bore 10 extending at right angles to the bore 9. The bore 9 contains a pair of opposed tappets 11, 12 disposed respectively in the bore portions 9A, 9B, the tappets being normally engaged, in use, respectively with the brake shoes 1, 2 which are engagable in slots 11A, 12A of the tappets and thereby prevent rotation of the engaged tappet parts. Brake actuating forces are applied to the shoes via the tappets by means of a force-applying means in the form of a wedge device 13 which includes a wedge 14 fast with and reciprocal by means of an actuating rod 15, the wedge being located between a pair of rollers 16, 17 carried by a cage 18 mounted on the rod 15. The rollers 16, 17, are disposed respectively between actuating surfaces 14A, 14B of the wedge and opposed surfaces 11B, 12B of the tappets, the angles of inclination of these surfaces relative to the longitudinal axis A of the wedge being preferably, although not essentially, the same. The roller 16 also engages a fixed surface 19A, formed in this embodiment on an insert 19 secured to the body 1, although it may be formed on an internal surface of the body proper, should this be convenient in practice.

The wedge 14, when urged in the direction of the arrow in Figure 2, actuates the tappets 11, 12 via the rollers 16, 17 in conventional manner. Since the roller 16 also bears on the inclined fixed surface 19A, any forces which would otherwise be transmitted from the trailing shoe tappet 12 to the leading shoe tappet 11 during actuation of the tappets are instead reacted on the insert 19 at the surface 19A. The wedge is thereby constrained to move in a substantially linear manner.

The tappets are adjusted simultaneously by a single common adjuster mechanism indicated generally at 20, which will now be described in detail. The adjuster includes a primary pinion 21 which meshes with a toothed rack 14C formed on a facing surface of the wedge 14, the aforesaid linear restraint of the wedge enabling it to be maintained in permanent engagement with the pinion 21. The pinion 21 is being freely rotatably mounted on a cylindrical coaxial sleeve 22 which has a radial flange 23 between which and an opposed surface of the pinion 21 is disposed a multi-plate friction clutch 24. One set of alternate plates of the clutch are engaged in axial slots 25 formed in an axial extension 26 of the pinion 21, the other set of alternate plates being fast for rotation with the sleeve 22. The clutch is urged into its engaged condition by a coil spring 27 acting between the face of the pinion 21 remote from the clutch and a collar 28 axially retained on the sleeve by a circlip or similar device 29. For normal operation, therefore, the pinion 21 and sleeve 22 rotate together as a unit under the action of the clutch 24.

As will be seen from Figure 4, the end face of the sleeve 22 at the opposite side of the clutch to the pinion 21 is formed with a slot 30 which receives a tongue 31 formed on an opposing face of a housing 32. The housing contains a sprag clutch 33 in the form of a coiled square-section spring acting between the housing 32 and a secondary pinion 34 mounted on and fast for rotation with a shaft 35 extending coaxially through the sleeve 22 and mounting, at its opposite end, a further secondary pinion 36 also fast for rotation with the shaft. The shape of the slot 30 is such as to permit the sleeve 22 to move relative to the housing 32 through a predetermined angle $\alpha$, the purpose of which will be explained hereinafter.

The secondary pinions 34, 36 are externally toothed and engaged with corresponding toothed formations 37, 38 formed on the external surfaces of the respective tappets 11, 12. The teeth on the secondary pinions and tappets are parallel to the longitudinal axes about which these components rotate and effectively form a splined driving connection between the secondary pinions and tappets, permitting the tappets to move axially relative to the pinions during brake actuation. Each of the tappets 11, 12 is internally threaded and receives a respective adjuster shaft 39, 40, the respective pairs of tappets and shafts constituting struts of extendible length which are extended by operation of the aforesaid adjuster mechanism, in the manner to be described, in order to maintain a substantially constant predetermined clearance between the brake shoes engaging and actuated by the tappets and a braking surface such as the internal surface of a brake drum.

When the wedge is urged inwardly by a power actuator, such as a pneumatic cylinder, acting on the rod 15, the rollers 16, 17 are expanded to actuate the tappets 11, 12, in conventional manner. Such movement of the wedge also rotates the pinion 21 via the wedge rack 14C and the pinion 21 rotates the sleeve 22 via the multi-plate clutch 24. Provided that outward movement of the tappets and shoes does not exceed the predetermined shoe to drum clearance, the angular rotation of the pinion 21 in the direction of arrow 'R1' will not exceed angle $\alpha$ (Figure 4) and the sleeve 22 will simply be reciprocated angularly by action of the wedge without operation of the adjuster.

When the tappet movement becomes excessive, the angular movement of the sleeve will exceed $\alpha$ and cause drive to be applied to the pinion 34 via the tongue 31 and sprag clutch 33 to rotate the tappet 11 and, simultaneously, the tappet 12 via the shaft 35 and secondary pinion 36. When the wedge is retracted, the pinion 21 and sleeve 22 rotate in the reverse direction until the clearance is restored between the sleeve and tongue 30. The force exerted by the sprag clutch 33, whilst sufficient to overcome the partially relieved return spring load in the tappet threads during brake actuation, is such that it is less than the return spring force in those threads during retraction of the shoes and the clutch will therefore slip as the wedge returns to its fully retracted position without turning the tappets in the reverse direction.

The purpose of the clutch 24 is to enable the adjuster to operate in a load insensitive manner. The force of the spring 27, which governs the frictional force built up in the clutch 24, is chosen so that no significant slipping of the clutch 24 occurs during the application of normal brake actuating forces to the shoes. In the event that such forces become large enough, for example, to initiate serious deflection of the brake components, the clutch 24 slips and the pinion 21 simply rotates on the sleeve 22, during the excessive load condition and thereby prevents the adjuster from adjusting in response such to brake component deflection.

It will be understood that, if load insensitivity is not a requirement, the clutch 24 may be omitted and the pinion 21 rendered permanently fast for rotation with the sleeve 22. Instead of the rack being formed on or carried by the wedge 14 in the embodiment described, it may alternatively be formed on or carried by the roller cage 18 or any other convenient movable component associated with the wedge assembly. In a further variation, the clearance between the slot 30 and tongue 31 may be omitted and the clearance provided between the rack 14 and pinion 21, or between that pinion and the sleeve 22 in the event that the pinion is drivingly connected to the shaft directly, rather than via the clutch 24. As a further alternative, it will be possible to provide the built in clearance in the multi-plate clutch 24 itself, when present, or in the teeth of the secondary pinions and/tappets.

Although described in the form of a wedge and roller actuator, the actuator of the invention may be of any other convenient type; in one alternative form, the force-applying means may be a rotary cam arranged to separate a pair of tappets and operate a drive member to effect simultaneous automatic adjustment of the tappets.

## Claims

1. A brake actuator comprising force-applying means (14) arranged to separate opposed tappets (11, 12) which transmit thrust from said means to braking elements engaged (1, 2), in use, by the tappets, each tappet including a pair of threadedly interengaged members (11, 39; 12, 40) forming an extensible strut, a characterised by drive device (21) connected to the force-applying means in such a manner as to be displaced by actuating movement of said means, transmission means (33) drivingly coupling said drive device, for one direction of displacement, to a pair of interconnected driving elements (34, 36) each permanently engaged with respective ones (39, 40) of the interengaged strut members of each strut, whereby said displacement of the drive device resulting from actuating movement of the force-applying means in one direction is transmitted via said driving elements to said interengaged strut members to extend the struts simultaneously.

2. An actuator according to Claim 1 characterised in that the drive device comprises a first part (21) actuated directly by the force-applying means (14) and a second part (22) coupled to the first part by second transmission means (24), which latter ceases to drive upon application by the force-applying means to the first part of the drive device of a force exceeding a predetermined value, thereby preventing operation of the adjuster during the continuance of said excessive force.

3. An actuator according to Claim 2 characterised in that said first part of the drive device is in the form of a pinion (21) forming a toothed connection with the force-applying means (14).

4. An actuator according to Claim 3 characterised in that the force applying means is a wedge and roller mechanism (13) of which the wedge (14) has a toothed rack (14C) formation thereon with which the pinion (21) forms said toothed connection, means (19A) being provided to restrain the wedge for linear movement.

5. An actuator according to any one of Claims 2 to 4 characterised in that said second transmission means (24) is a multi-plate clutch.

6. An actuator according to Claim 4 characterised in that the means for restraining the wedge for linear movement is a surface (19A) fixed relative to the housing (8) against which bears an adjacent roller (16) of the wedge and roller mechanism.

7. An actuator according to any one of Claims 2 to 6 characterised in that said driving elements (34, 36) are rigidly interconnected for simultaneous rotation by a shaft (35) carrying the drive device (21) and first and second transmission means (33, 24).

8. An actuator according to any one of Claims 2 to 7 characterised in that the second part (22) of the drive device (21, 22) is coupled to said driving elements (34, 36) by a connection (30, 31) permitting a predetermined amount of free play representing the maximum desired clearance between said braking elements and an associated braking surface.

9. An actuator according to Claim 8 characterised in that the drive device (21, 22) is coupled to the driving elements (34, 36) by a tongue and groove connection (30, 31).

10. An actuator according to any one of Claims 4 to 9 characterised in that the multi-plate clutch (24) is urged into its engaged condition by a coil spring (27) surrounding the second part (22) of the drive device and acting between the first and second parts (21, 22) of the drive device.

11. An actuator according to any one of the preceding claims characterised in that the transmission means (33) coupling the drive device (21, 22) to the driving elements (34, 36) is a sprag clutch.

0 262 866

FIG.1.

FIG.2.

FIG. 3.

FIG. 4.

0 262 866